# FASCICULE DE BREVET EUROPEEN

(11) **EP 0 922 519 B1**
(45) Date de publication et mention de la délivrance du brevet: **03.03.2004**
(21) Numéro de dépôt: 98403100.5
(22) Date de dépôt: 09.12.1998
(51) Int. Cl.: B23D 65/00

(54) **Procédé de coupe pendant lequel l'outil sous forme d'un fil ou d'une lame est transformé géometriquement et thermiquement et/ou mécaniquement, et dispositif de sciage**
Schneidverfahren, bei dem ein Sägedraht oder Sägeblatt geometrisch und thermisch und/oder mechanisch verformt wird, und Sägemaschine
Method of cutting by geometrically and thermally and/or mechanically deforming a saw wire or saw blade, and sawing machine

(30) Priorité: 10.12.1997 FR 9715605
(43) Date de publication de la demande: 16.06.1999
(73) Titulaire: Absalon, 41500 Menars (FR)
(72) Inventeur: Cousin, Thierry, 41500 Menars (FR); Harel, Philippe, 35133 Lecousse (FR)
(74) Mandataire: Debay, Yves

(56) Documents cités:
- DE-C- 288 625
- DE-C- 3 313 160
- FR-A- 800 831
- FR-A- 1 101 214
- GB-A- 2 114 924
- US-A- 2 422 871
- US-A- 3 257 792
- US-A- 3 283 494
- US-A- 3 979 988
- US-A- 4 485 757
- PATENT ABSTRACTS OF JAPAN vol. 5, no. 143 (M-807), 9 septembre 1981 (1981-09-09) -& JP 56 076327 A (KATO SEIJIRO), 23 juin 1981 (1981-06-23)
- PATENT ABSTRACTS OF JAPAN vol. 013, no. 055, 8 février 1987 (1987-02-08) -& JP 63 260758 A (KENICHI ISHIKAWA), 27 octobre 1988 (1988-10-27)

## Description

La présente invention concerne un procédé de coupe de matériau utilisant un fil ou une lame et un dispositif de mise en oeuvre d'un tel procédé utilisé notamment, dans une machine utilisant comme outil de coupe, un fil ou une lame.

Il est connu dans l'art antérieur de nombreux procédés de découpe de matériau tels que, par exemple, l'électroérosion, l'oxycoupage, la découpe par laser ou par jet d'eau ou bien encore la découpe à l'aide d'une lame de type scie à ruban ou d'un fil. Dans ces deux derniers procédés, la lame ou le fil sont conformés sous la forme d'une boucle sans fin. Chaque procédé précédemment cité possède des limites d'utilisation. Ainsi, l'utilisation de l'électroérosion nécessite l'emploi d'un matériau conducteur et d'un fil en laiton. Le laser ne peut être utilisé que pour des coupes ne dépassant pas une hauteur déterminée. La technique du jet d'eau est limitée à certains matériaux et reste une technique onéreuse. Le procédé d'oxycoupage provoque une pollution de la surface du matériau coupé et modifie les caractéristiques mécaniques de l'état de surface du fait de la chaleur dégagée lors de la découpe. La découpe par fil ou lame nécessite pour une coupe efficace, l'utilisation d'un fil ou d'une lame adaptée au matériau à découper et notamment, en fonction de la dureté du matériau. Ceci occasionne des opérations de changement de lame ou de fil qui diminue la productivité. De plus, la vitesse de coupe des procédés à fil ou à lame est relativement faible et de l'ordre de 10 à 30 m/min. Enfin, lors de la découpe par fil ou par lame, l'outil de découpe s'use et s'encrasse du fait des passages successifs sur le matériau, ce qui diminue, au fur et à mesure de la découpe, les performances de l'outil de coupe.

La présente invention a donc pour premier objet de pallier les inconvénients de l'art antérieur en proposant un procédé de coupe de matériau utilisant un fil ou une lame permettant d'adapter les caractéristiques de l'outil de coupe au matériau et de conserver des performances optimales pendant l'opération de découpe.

Ce premier but est atteint par le fait que le procédé comprenant une étape de coupe d'un matériau à découper, est caractérisé en ce qu'il comprend une étape de transformation géométrique et thermique et/ou mécanique d'un élément de forme filaire, pour former un outil de coupe adapté au matériau à découper, cette étape étant réalisée en amont de la zone de coupe de sorte que l'outil de coupe n'effectue qu'un seul passage sur le matériau à découper.

Selon une autre particularité, la transformation géométrique consiste à donner à la section de l'élément allongé une forme déterminée et à former sur la surface extérieure de l'élément allongé, des moyens coupants ou tranchants.

Selon une autre particularité, la transformation géométrique consiste à modifier le profil de l'élément allongé.

Selon une autre particularité, la transformation thermique est destinée à modifier les caractéristiques mécaniques de la surface de l'élément allongé et consiste de façon préférentielle en une trempe superficielle.

Selon une autre particularité, le procédé comprend en amont de l'étape de transformation, une étape d'approvisionnement en élément allongé, et en aval de l'étape de coupe une étape de récupération de l'outil de coupe ayant effectué un passage sur le matériau à découper.

Selon une autre particularité, le procédé comprend une étape de guidage de l'outil coupant avant et après l'étape de coupe.

Un deuxième but de l'invention est de proposer un dispositif permettant la mise en oeuvre de procédé selon l'invention.

Ce but est atteint par le dispositif de découpe de matériau tel que défini dans la revendication 1.

Selon une autre particularité, les moyens de transformation géométrique comprennent des moyens de calandrage et/ou de laminage pour former la section de forme déterminée.

Selon une autre particularité, les moyens de transformation géométrique comprennent des moyens de fraisage et/ou meulage et de déformation à chaud ou à froid pour former les éléments coupants ou tranchants préférentiellement de type dents.

Selon une autre particularité, les moyens de transformation géométrique comprennent des moyens de modification du profil longitudinal de l'élément allongé pour former préférentiellement une torsade de pas déterminée.

Selon une autre particularité, le dispositif comprend des moyens de transformation thermique et/ou mécanique pour modifier les caractéristiques mécaniques de la surface de l'outil coupant en fonction du matériau à découper.

Selon une autre particularité, les moyens de transformation thermique comprennent une source de chaleur de type induction et/ou laser et/ou infrarouge et des moyens de refroidissement de l'outil coupant.

Selon une autre particularité, les moyens de transformations mécaniques comprennent un dispositif réalisant un écrouissage.

Selon une autre particularité, le dispositif comprend des moyens de guidage de l'outil coupant, disposés en amont et en aval du poste de découpe, les mouvements des moyens de guidage étant indépendants les uns des autres.

Selon une autre particularité, les moyens de guidage comprennent une buse amont et une buse aval de formes déterminées et constituées d'un matériau dont les caractéristiques mécaniques sont adaptées à l'outil coupant.

Selon une autre particularité, les moyens de guidage comprennent des galets rotatifs amont et aval de formes déterminées complémentaires à l'outil coupant et constituées d'un matériau dont les caractéristiques mécaniques sont adaptées à cet outil coupant.

Selon une autre particularité, le dispositif comprend des moyens d'approvisionnement en éléments allongés qui alimentent les moyens de transformation et des moyens de récupération de l'outil coupant une fois l'opération de découpe réalisée.

Selon une autre particularité, les moyens de récupération sont animés du même mouvement que les moyens de guidage situés en aval du poste de découpe.

Selon une autre particularité, les moyens de positionnement de la pièce à découper sont animés d'un mouvement de rotation de sorte que les axes de rotation sont perpendiculaires entre eux et coplanaires.

Selon une autre particularité, la vitesse de défilement de l'outil de coupe est comprise entre 10 et 550 m/min.

D'autres particularités et avantages de la présente invention apparaîtront plus clairement à la lecture de la description ci-après faite en référence aux dessins annexés dans lesquels :
- la figure 1 représente un schéma simplifié du dispositif permettant la mise en oeuvre du procédé selon l'invention,
- la figure 2 représente un exemple de réalisation des moyens de transformation géométrique.

Selon l'invention, le procédé comprend, avant l'étape de découpe, une étape de transformation d'un élément allongé, par exemple, de type fil, pour former un outil coupant n'effectuant qu'un seul passage sur le matériau. Ainsi, contrairement au procédé de découpe de l'art antérieur utilisant un fil ou une lame, où l'outil coupant est constitué d'une boucle sans fin, le procédé selon l'invention fabrique en continu l'outil coupant qui n'est utilisé qu'une seule fois. En d'autres termes, l'outil de coupe réalisant l'opération de découpe du matériau, passe une seule fois dans le matériau et est toujours neuf à l'attaque du matériau. Par conséquent, les performances de découpe de l'outil sont homogènes dans le temps.

Les transformations réalisées sur l'élément allongé sont destinées à modifier la forme et les caractéristiques mécaniques de l'élément allongé pour en faire un outil coupant très performant et adapté au matériau à découper. Une première transformation est de type géométrique, c'est-à-dire que la forme de l'élément allongé, et notamment sa section, sont modifiées. La forme finale est, par exemple, rectangulaire. La transformation géométrique consiste également à former sur la surface de l'élément allongé des éléments coupants ou tranchants, tels que, par exemple, des dents. Ainsi, à l'issue de cette étape de transformation, le procédé selon l'invention fournit en continu un outil coupant. Les performances de cet outil coupant peuvent être augmentées en réalisant par la suite ou simultanément des transformations mécaniques ou thermiques, visant à modifier l'état de surface de l'outil de coupe afin d'adapter les caractéristiques mécaniques de l'outil de coupe au matériau à découper. Ces transformations seront décrites en détails ultérieurement.

Afin d'améliorer la précision de découpe, l'outil de coupe est, par exemple, guidé en amont et en aval du poste de découpe. De même, une étape d'approvisionnement en élément allongé est, par exemple prévue en amont de l'étape de transformation. Enfin, une fois l'étape de coupe réalisée, l'outil de découpe est, par exemple, récupéré.

Ainsi, le procédé consiste par exemple :
- dans une première étape, à débobiner un élément allongé, notamment métallique, d'un dispositif d'alimentation,
- dans une deuxième étape, à conformer l'élément allongé pour modifier sa section géométrique pour obtenir, par exemple, une section rectangulaire,
- dans une troisième étape, à réaliser des zones coupantes, tranchantes, comme des dents sur l'élément allongé,
- dans une quatrième étape, à guider l'élément allongé avant l'étape suivante,
- dans une cinquième étape, à torsader l'élément allongé, équipé de dents suivant son axe longitudinal,
- dans une sixième étape, à traiter thermiquement et/ou mécaniquement, l'élément allongé équipé de dents et torsadé,
- dans une septième étape, à refroidir l'élément allongé équipé de dents, torsadé et traité,
- dans une huitième étape, à guider l'élément allongé entre des buses pour réaliser la coupe,
- dans une neuvième étape, à embobiner l'élément allongé.

Ainsi, l'un des avantages de cette invention est de pouvoir transformer le fil ou la lame avant la coupe d'un matériau. Les transformations réalisées pour le procédé permettent la réalisation de ces transformations sur le site même de découpe au lieu de deux postes séparés, sans être dépendant du changement d'outil.

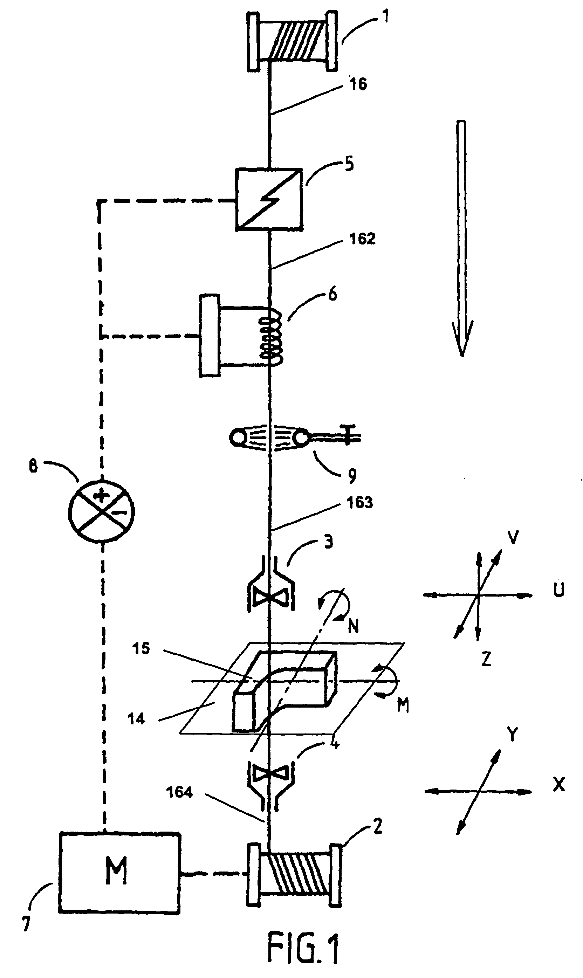

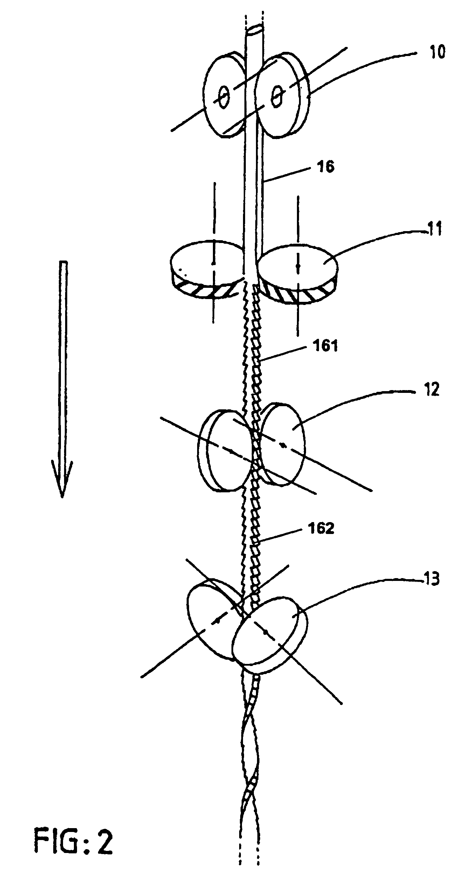

La figure 1 représente un schéma simplifié du dispositif permettant la mise en oeuvre du procédé selon l'invention. Le dispositif selon l'invention comprend essentiellement des moyens de positionnement (14) et de maintien d'une pièce (15) de matériau à découper et des moyens (5) de transformation géométrique, alimentés en élément allongé (16), par exemple, par des moyens (1) d'approvisionnement en continu, par exemple, de type bobine équipée d'un frein. La figure 2 représente un exemple de réalisation des moyens de transformation géométrique. Ces moyens (10 à 13) de transformation sont destinés à modifier la forme et les propriétés de l'élément allongé (16) pour réaliser un outil coupant possédant des caractéristiques adaptées au matériau à découper. La première transformation géométrique consiste à obtenir une forme de section déterminée pour l'outil de coupe. Dans l'exemple représenté figure 2, la forme choisie pour la section est rectangulaire. Pour obtenir cette forme, les moyens de transformation (10 à 13) géométrique comprennent un dispositif de laminage (10) constitué, par exemple, de galets. Ce dispositif de laminage peut être remplacé par un dispositif de calandrage ou, pour un autre dispositif de galet, pour obtenir la forme de section voulue, par exemple rectangulaire, ou comportant de multiples sections anguleuses. Cette forme est déterminée par le type de matériau constituant la pièce à découper.

Les moyens de transformation permettent également de réaliser des éléments coupants ou tranchants tels que des dents (161) sur l'élément allongé (16). Ces dents (161) sont obtenues par l'intermédiaire de moyens (11) de fraisage et/ou de meulage et/ou de déformation à froid ou à chaud. Le nombre et la forme des éléments coupants ou tranchants tels que les dents sont déterminés en fonction des propriétés du matériau constituant la pièce (15) à découper. Les dents (161) sont, par exemple usinées, sur les deux largeurs de la section rectangulaire de l'élément (16) allongé. A l'issue de cette transformation, on obtient un outil coupant (162) constitué d'une lame plate possédant deux bords de coupe.

Les moyens de transformation géométrique permettent également de réaliser une déformation du profil de l'outil (162) coupant. Cette déformation consiste, par exemple, à réaliser une torsade selon l'axe longitudinal de l'outil (162) coupant. Cette torsade est obtenue, par exemple, par l'intermédiaire de deux galets (13) entre lesquels passe l'outil coupant (162). Les axes de rotation forment un angle déterminé en fonction du pas choisi pour réaliser la torsade.

Entre chaque transformation géométrique, l'élément allongé (16), puis l'outil (162) coupant, peuvent être guidés, par exemple, par une paire (12) de galets.

Le dispositif selon l'invention comprend également des moyens (6, 9) de transformation thermique et/ou mécanique situés en aval des moyens (5) de transformation géométrique destinés à adapter les caractéristiques mécaniques de l'outil (162) coupant obtenu après les transformations géométriques, aux caractéristiques du matériau constituant la pièce (15) à découper. Ces moyens (6, 9) comprennent, par exemple, des moyens de traitement thermique et/ou des moyens de traitement mécanique permettant de modifier l'état de surface de l'outil (162) coupant. A titre d'exemple, les moyens de traitement thermique comprennent un dispositif (6) à induction et/ou un laser et/ou un dispositif à infrarouge et un dispositif de refroidissement par fluide, permettant, par exemple, de réaliser une trempe superficielle. Les moyens de traitement mécanique comprennent, par exemple, un dispositif réalisant un écrouissage. Ces deux types de traitement ont pour objectif principal de modifier les caractéristiques mécaniques et notamment, la résistance et la dureté, pour réaliser un outil de coupe (163) performant et adapté au matériau de la pièce (15) à découper.

Selon un exemple de réalisation, le traitement thermique par induction permet de durcir la couche supérieure externe du fil ou de la lame sans déformation ni oxydation. Ce dispositif comporte un inducteur dans lequel circule des courants hautes fréquences pour effectuer une trempe superficielle.

A l'issue de ce traitement thermique et/ou mécanique, l'outil de coupe (163) est prêt pour réaliser la découpe du matériau. Afin de réaliser la découpe, l'outil de coupe est, par exemple, guidé par des moyens (3, 4) de guidage, comprenant, par exemple, une buse (3) en amont, et une buse (4) en aval de la pièce (15) à découper. Ces deux buses (3, 4) sont réalisées dans un matériau possédant, par exemple, une dureté supérieure à la dureté du l'outil (163) de coupe. Le matériau préféré est, par exemple, de la céramique De même la forme des buses (3, 4) permet d'obtenir pour l'outil (163) de coupe des angles de dépouille importants lors du mouvement des buses (3, 4). Chaque buse (3, 4) est également montée sur un dispositif leur transmettant un mouvement de translation dans un plan (UV, XY) perpendiculaire à l'outil de coupe, le mouvement d'une buse (3, 4) étant indépendant du mouvement de l'autre buse. La buse (3) située en amont peut également être animée d'un mouvement de translation (Z) parallèle à l'axe longitudinal de l'outil coupant (163). Les buses (3, 4) peuvent être remplacées par des galets (non représentés) dont les axes de rotation possèdent, par exemple, trois degrés de liberté. Ces galets sont conformés pour épouser la forme de l'outil coupant (163), notamment afin d'éviter l'usure prématurée des galets.

La pièce (15) à découper est, par exemple, bridée sur des moyens (14) de positionnement tel qu'un plateau. Ce plateau (14) est, par exemple, monté sur un dispositif lui transférant un mouvement de rotation suivant deux axes (M, N), ces deux axes (M, N) sont, par exemple, compris dans le plan du plateau (14) et sont, par exemple, perpendiculaires entre eux. Ces mouvements de rotation permettent d'orienter la pièce (15) à découper afin de former, pour l'outil (163) de découpe, des angles de dépouille très importants.

Lorsque l'outil de coupe (164) est passé une fois sur la pièce (15) à découper, il est récupéré, par exemple, sur une bobine (2) de récupération. Cette bobine (2) est, par exemple, entraînée par un moteur équipé d'un variateur, et montée sur un dispositif ayant le même mouvement que la buse (4) située en aval. Cette liaison permet de contrôler l'angle de dépouille de l'outil (163) de coupe.

Une fois récupéré, l'outil de coupe (164) peut être jeté ou recyclé. Par exemple, après avoir été utilisé une première fois, l'outil de coupe (164) celui-ci peut-être traité pour pouvoir à nouveau être utilisé comme élément allongé.

Le moteur (7) qui entraîne le dispositif de réception assure la vitesse de coupe, de défilement, du fil ou de la lame. Des moyens d'asservissement gèrent la vitesse de coupe de l'outil coupant et les transformations géométriques (5) et thermiques et/ou mécaniques (6). Une relation permet de lier la vitesse de coupe, le traitement à réaliser ainsi que le nombre de dents et le type de section à retenir.

Des moyens d'asservissement (8) connectés, premièrement aux moyens de transformation géométrique (5), deuxièmement aux moyens (6) de transformation thermique et/ou mécanique et troisièmement au moteur (7) d'entraînement de la bobine (2) de récupération permettent de gérer la vitesse de coupe et les transformations à réaliser sur l'élément allongé, notamment la forme de la section à réaliser, le nombre de dents à former sur l'élément allongé et le type de traitement thermique et/ou mécanique à réaliser, en fonction des caractéristiques mécaniques du matériau constituant la pièce (15) à découper.

Ainsi, cet asservissement (8) permet de modifier, sans démonter l'outil de coupe, les caractéristiques de cet outil, et donc d'optimiser ses caractéristiques par rapport aux caractéristiques du matériau ou d'un nouveau matériau.

Des moyens de fixation, du type bridage, permettent le maintien de la pièce (15) au moment de la coupe. Ces moyens de fixation sont animés de mouvement de rotation. Selon un exemple de réalisation, la pièce à découper est bridée mécaniquement sur un support (14) monté sur un dispositif, perpendiculaire à l'outil à l'état de repos, animé de mouvement de rotation M ;N. les mouvements de rotation M,N sont perpendiculaires l'un par rapport à l'autre.

Il est également à la portée de l'homme de métier d'envisager un ordre différent dans la réalisation des différentes transformations de l'élément allongé sans sortir du cadre de l'invention. Pour ce faire, les différents moyens de transformation peuvent être motorisés, cette motorisation étant, par exemple, raccordée au dispositif d'asservissement (8) raccordé à une unité d'exploitation. Cette unité d'exploitation peut également être équipée d'un pupitre de commande et d'un écran permettant la programmation de transformation et le dialogue entre l'opérateur et le dispositif selon l'invention.

Les moyens d'approvisionnement (1) en élément allongé (16) peuvent être constitués, par un ensemble qui crée en continu l'élément allongé, par exemple, de type fil ou lame, à partir de matière première. La matière première est mise en circulation à travers un système de filières pour obtenir un fil de section déterminée. Ensuite, le fil ainsi obtenu alimente, par exemple, les moyens de transformation thermique et/ou mécanique.

Selon un exemple de réalisation, l'invention présentée sur une machine de coupe à fil ou à lame autorise l'achat d'une bobine bon marché où le fil ou la lame (16) se voit valorisé et transformé par différents dispositifs pour devenir un outil coupant très performant puis jetable ou recyclable.

Ainsi, la matière première pourra circuler à travers une pluralité de filières pour obtenir un fil d'une section demandée, qui pourra subir ou non différentes opérations de chauffage comme la trempe, le revenu et le recuit, suivies d'un refroidissement, qui ont pour but de donner au fil les propriétés les plus appropriées pour son emploi.

La machine de coupe à fil ou à lame pourra émettre des hypothèses de transformation des fils ou lames (16), avant la découpe, en fonction de la dureté du matériau à couper pour optimiser les différentes opérations. Ces transformations pourront être interchangeables, modulables en fonction des transformations demandées. Les différentes possibilités seront assurées par des moyens de changement pouvant être motorisés et raccordés à l'unité d'exploitation.

Selon un exemple de réalisation non limitatif, les galets (10) pourront être changés par un ensemble de nouveaux galets pour obtenir une section autre que rectangulaire. La fonction de transformation de la section sera toujours réalisée mais la section pourra être modifiée. Ainsi, après l'opération de transformation géométrique (5), le fil ou la lame (162) pourra être de multiples sections anguleuses.

La machine équipée, notamment d'un pupitre de commande et d'un écran, permettra la programmation et le dialogue entre l'opérateur et l'automate ou l'unité d'exploitation de la machine. En temps voulu, l'opérateur pourra connaître différents paramètres comme la vitesse de coupe, le type de transformation géométrique, la température appliquée au fil ou la lame (162) pendant le traitement thermique, ainsi que d'autres informations comme les puissances consommées.

A titre d'exemple, non limitatif, l'élément allongé est un fil de section rond, dont le diamètre est compris entre 0, 2 et 0,7 mm. La première transformation géométrique donne une forme rectangulaire à la section du fil qui devient donc une lame. Cette lame reçoit alors sur sa largeur des dents de découpe, par fraisage. Les dents sont perpendiculaires à l'axe longitudinal de la lame. Ensuite, la lame est torsadée, puis traitée thermiquement par induction et refroidie. On obtient alors un outil tranchant performant. Les caractéristiques de cet outil permettent d'obtenir une vitesse de coupe comprise entre 10 et 550m/min.

On conçoit que le procédé et le dispositif de découpe selon l'invention permettent d'obtenir un gain important sur la vitesse et la qualité de découpe. En effet, selon le procédé, l'outil de coupe est fabriqué en continu juste avant l'opération de découpe et n'est utilisé que pour un seul passage. Par conséquent, les caractéristiques de l'outil utilisé sont toujours les mêmes. De plus, il n'est plus nécessaire de changer ou de nettoyer l'outil de coupe puisque celui-ci est en fait toujours neuf lorsqu'il passe sur la pièce à découper. Enfin, ce procédé permet d'utiliser un élément allongé de qualité ordinaire et donc bon marché. En effet, cet élément allongé sera ensuite traité mécaniquement et/ou thermiquement pour former un outil de coupe possédant des caractéristiques optimales pour un seul passage sur la pièce à découper.

## Revendications

1. Procédé de coupe de matériau utilisant un fil ou une lame, comprenant une étape de coupe d'un matériau à découper, et **caractérisé en ce qu'**il comprend une étape de transformation géométrique et thermique et/ou mécanique d'un élément de forme allongé (16), pour former un outil de coupe (163) adapté au matériau à découper, cette étape étant réalisée en amont de la zone de coupe de sorte que l'outil de coupe (163) ainsi formé en continu, n'effectue qu'un seul passage sur le matériau à découper.

2. Procédé de coupe de matériau selon la revendication 1, **caractérisé en ce que** la transformation géométrique consiste à donner à la section de l'élément allongé (16) une forme déterminée et à former sur la surface extérieure de l'élément allongé (16), des moyens (160) coupants ou tranchants.

3. Procédé de coupe de matériau selon la revendication 1 ou 2, **caractérisé en ce que** la transformation géométrique consiste à modifier le profil de l'élément allongé (16).

4. Procédé de coupe de matériau selon l'une des revendications 1 à 3, **caractérisé en ce que** la transformation thermique est destinée à modifier les caractéristiques mécaniques de la surface de l'élément allongé et consiste de façon préférentielle en une trempe superficielle.

5. Procédé de coupe de matériau selon l'une des revendications 1 à 4, **caractérisé en ce qu'**il comprend en amont de l'étape de transformation, une étape d'approvisionnement en élément (16) allongé, et en aval de l'étape de coupe une étape de récupération de l'outil (164) de coupe ayant effectué un passage sur le matériau à découper.

6. Procédé de coupe de matériau selon l'une des revendications 1 à 3, **caractérisé en ce qu'**il comprend une étape de guidage de l'outil (163) coupant avant et après l'étape de coupe.

7. Dispositif de découpe de matériau utilisant un fil ou une lame comprenant des moyens (14) de positionnement de la pièce (15) de matériau à découper, un outil (163) coupant de type fil ou lame, **caractérisé en ce que** l'outil coupant (163) est réalisé à partir d'un élément (16) allongé dont la section est modifiée par des moyens (10, 11, 12, 13) de transformation géométrique pour former, d'une part une section de forme déterminée, et d'autre part, des éléments (160) coupants ou tranchants en fonction des caractéristiques du matériau à découper, ledits moyens de transformation géométrique étant situés en amont de la zone de coupe de sorte que l'outil de coupe (163) ainsi formé en continu par lesdits moyens, n'effectue qu'un seul passage sur le matériau à découper.

8. Dispositif de découpe de matériau selon la revendication 7, **caractérisé en ce que** les moyens (10, 11, 12, 13) de transformation géométrique comprennent des moyens (10) de calandrage et/ou de laminage pour former la section de forme déterminée.

9. Dispositif de découpe de matériau selon la revendication 7 ou 8, **caractérisé en ce que** les moyens (10, 11, 12, 13) de transformation géométrique comprennent des moyens (11) de fraisage et/ou meulage et de déformation à chaud ou à froid pour former les éléments (160) coupants ou tranchants préférentiellement de type dents.

10. Dispositif de découpe de matériau selon l'une des revendications 7 à 9, **caractérisé en ce que** les moyens (10, 11, 12, 13) de transformation géométrique comprennent des moyens (13) de modification du profil longitudinal de l'élément allongé (16) pour former préférentiellement une torsade de pas déterminée.

11. Dispositif de découpe de matériau selon l'une des revendications 7 à 10, **caractérisé en ce qu'**il comprend des moyens (6, 9) de transformation thermique et/ou mécanique pour modifier les caractéristiques mécaniques de la surface de l'outil coupant (162) en fonction du matériau à découper.

12. Dispositif de découpe de matériau selon l'une des revendications 7 à 11, **caractérisé en ce que** les moyens de transformation (5) thermique comprennent une source de chaleur de type induction et/ou laser et/ou infrarouge et des moyens (9) de refroidissement de l'outil coupant.

13. Dispositif de découpe de matériau selon l'une des revendications 7, à 12, **caractérisé en ce que** les moyens (5) de transformation mécanique comprennent un dispositif réalisant un écrouissage.

14. Dispositif de découpe de matériau selon l'une des revendications 7, à 13, **caractérisé en ce qu'**il comprend des moyens (3, 4) de guidage de l'outil coupant, disposés en amont et en aval du poste de découpe, et constitués d'un matériau d'une dureté supérieure à la dureté de l'outil coupant, les mouvements des moyens (3, 4) de guidage étant indépendants les uns des autres.

15. Dispositif de découpe de matériau selon la revendication 14, **caractérisé en ce que** les moyens (3,4) de guidage comprennent une buse (3) amont et une buse (4) aval de formes déterminées et constituées d'un matériau dont les caractéristiques mécaniques sont adaptées à l'outil coupant (163).

16. Dispositif de découpe de matériau selon la revendication 14, **caractérisé en ce que** les moyens de guidage comprennent des galets rotatifs amont et aval de formes déterminées complémentaires à l'outil coupant (163) et constituées d'un matériau dont les caractéristiques mécaniques sont adaptées à cet outil coupant.

17. Dispositif de découpe de matériau selon l'une des revendications 7, à 16, **caractérisé en ce qu'**il comprend des moyens (1) d'approvisionnement en éléments allongés (16) qui alimentent les moyens (5) de transformation et des moyens (2) de récupération de l'outil coupant (164) une fois l'opération de découpe réalisée.

18. Dispositif de découpe de matériau selon la revendication 17 et l'une des revendications 14 à 16 , **caractérisé en ce que** les moyens (2) de récupération sont animés du même mouvement que les moyens (4) de guidage situés en aval du poste de découpe.

19. Dispositif de découpe de matériau selon l'une des revendications 7 à 18, **caractérisé en ce que** les moyens (14) de positionnement de la pièce à découper sont animés d'un mouvement de rotation de sorte que les axes (M,N) de rotation de ce mouvement sont perpendiculaires entre eux et coplanaires.

20. Dispositif de découpe de matériau selon l'une des revendications 7 à 19, **caractérisé en ce que** la vitesse de défilement de l'outil (163) de coupe est comprise entre 10 et 550 m/min.

## Patentansprüche

1. Verfahren zum Schneiden eines Materials, welches einen Draht oder eine Lamelle verwendet, mit einem Schritt des Schneidens eines zu schneidenden Materials, und **dadurch gekennzeichnet, daß** es einen Schritt der geometrischen und thermischen und/oder mechanischen Transformation eines Elements (16) mit länglicher Form umfaßt, um ein Schneidwerkzeug (163) auszubilden, das an das zu schneidende Material angepaßt ist, wobei dieser Schritt vor der Schneidzone durchgeführt wird, so daß das so kontinuierlich ausgebildete Schneidwerkzeug (163) nur einen einzigen Durchgang am zu schneidenden Material durchführt.

2. Verfahren zum Schneiden eines Materials nach Anspruch 1, **dadurch gekennzeichnet, daß** die geometrische Transformation darin besteht, dem Querschnitt des länglichen Elements (16) eine bestimmte Form zu verleihen und auf der Außenfläche des länglichen Elements (16) Schneid- oder Schermittel (160) auszubilden.

3. Verfahren zum Schneiden eines Materials nach Anspruch 1 oder 2, **dadurch gekennzeichnet, daß** die geometrische Transformation aus dem Modifizieren des Profils des länglichen Elements (16) besteht.

4. Verfahren zum Schneiden eines Materials nach einem der Ansprüche 1 bis 3, **dadurch gekennzeichnet, daß** die thermische Transformation die mechanischen Eigenschaften der Oberfläche des länglichen Elements modifizieren soll und vorzugsweise aus einer Oberflächenhärtung besteht.

5. Verfahren zum Schneiden eines Materials nach einem der Ansprüche 1 bis 4, **dadurch gekennzeichnet, daß** es vor dem Schritt der Transformation einen Schritt der Versorgung mit einem länglichen Element (16) und nach dem Schritt des Schneidens einen Schritt der Rückgewinnung des Schneidwerkzeugs (164), das einen Durchgang an dem zu schneidenden Material durchgeführt hat, aufweist.

6. Verfahren zum Schneiden eines Materials nach einem der Ansprüche 1 bis 3, **dadurch gekennzeichnet, daß** es einen Schritt der Führung des Schneidwerkzeugs (163) vor und nach dem Schneidschritt aufweist.

7. Vorrichtung zum Schneiden eines Materials, die einen Draht oder eine Lamelle verwendet, mit Mitteln (14) zur Positionierung des zu schneidenden Materialstücks (15), einem Schneidwerkzeug (163) vom Typ Draht oder Lamelle, **dadurch gekennzeichnet, daß** das Schneidwerkzeug (163) aus einem länglichen Element (16) hergestellt wird, dessen Querschnitt durch Mittel (10, 11, 12, 13) zur geometrischen Transformation modifiziert wird, um einerseits einen Querschnitt mit bestimmter Form und andererseits Schneid- oder Scherelemente (160) in Abhängigkeit von den Eigenschaften des zu schneidenden Materials auszubilden, wobei die Mittel zur geometrischen Transformation vor der Schneidzone liegen, so daß das so kontinuierlich durch die Mittel gebildete Schneidwerkzeug (163) nur einen einzigen Durchgang an dem zu schneidenden Material durchführt.

8. Vorrichtung zum Schneiden eines Materials nach Anspruch 7, **dadurch gekennzeichnet, daß** die Mittel (10, 11, 12, 13) zur geometrischen Transformation Mittel (10) zum Kalandrieren und/oder zum Walzen umfassen, um den Querschnitt mit bestimmter Form auszubilden.

9. Vorrichtung zum Schneiden eines Materials nach Anspruch 7 oder 8, **dadurch gekennzeichnet, daß** die Mittel (10, 11, 12, 13) zur geometrischen Transformation Mittel (11) zum Fräsen und/oder Schleifen und zur Heiß- oder Kaltverformung aufweisen, um die Schneid- oder Scherelemente (160) vorzugsweise vom Typ Zähne auszubilden.

10. Vorrichtung zum Schneiden eines Materials nach einem der Ansprüche 7 bis 9, **dadurch gekennzeichnet, daß** die Mittel (10, 11, 12, 13) zur geometrischen Transformation Mittel (13) zur Modifikation des Längsprofils des länglichen Elements (16) aufweisen, um vorzugsweise eine gewundenen Form mit bestimmter Steigung auszubilden.

11. Vorrichtung zum Schneiden eines Materials nach einem der Ansprüche 7 bis 10, **dadurch gekennzeichnet, daß** sie Mittel (6, 9) zur thermischen und/oder mechanischen Transformation zum Modifizieren der mechanischen Eigenschaften der Oberfläche des Schneidwerkzeugs (162) in Abhängigkeit von dem zu schneidenden Material aufweist.

12. Vorrichtung zum Schneiden eines Materials nach einem der Ansprüche 7 bis 11, **dadurch gekennzeichnet, daß** die Mittel (5) zur thermischen Transformation eine Wärmequelle vom Typ Induktion und/oder Laser und/oder Infrarot und Mittel (9) zur Kühlung des Schneidwerkzeugs aufweisen.

13. Vorrichtung zum Schneiden eines Materials nach einem der Ansprüche 7 bis 12, **dadurch gekennzeichnet, daß** die Mittel (5) zur mechanischen Transformation eine Vorrichtung aufweisen, die eine Kaltbearbeitung ausführt.

14. Vorrichtung zum Schneiden eines Materials nach einem der Ansprüche 7 bis 13, **dadurch gekennzeichnet, daß** sie Mittel (3, 4) zur Führung des Schneidwerkzeugs aufweist, die vor und hinter dem Schneidstand angeordnet sind und aus einem Material mit einer Festigkeit, die höher ist als die Festigkeit des Schneidwerkzeugs, bestehen, wobei die Bewegungen der Führungsmittel (3, 4) voneinander unabhängig sind.

15. Vorrichtung zum Schneiden eines Materials nach Anspruch 14, **dadurch gekennzeichnet, daß** die Führungsmittel (3, 4) eine vordere Düse (3) und eine hintere Düse (4) mit bestimmten Formen aufweisen, die aus einem Material bestehen, dessen mechanische Eigenschaften an das Schneidwerkzeug (163) angepaßt sind.

16. Vorrichtung zum Schneiden eines Materials nach Anspruch 14, **dadurch gekennzeichnet, daß** die Führungsmittel vordere und hintere Drehwalzen mit bestimmten zum Schneidwerkzeug (163) komplementären Formen aufweisen, die aus einem Material bestehen, dessen mechanische Eigenschaften an dieses Schneidwerkzeug angepaßt sind.

17. Vorrichtung zum Schneiden eines Materials nach einem der Ansprüche 7 bis 16, **dadurch gekennzeichnet, daß** sie Mittel (1) zur Versorgung mit länglichen Elementen (16), die die Mittel (5) zur Transformation versorgen, und Mittel (2) zur Rückgewinnung des Schneidwerkzeugs (164), sobald der Schneidvorgang ausgeführt ist, aufweist.

18. Vorrichtung zum Schneiden eines Materials nach Anspruch 17 und einem der Ansprüche 14 bis 16, **dadurch gekennzeichnet, daß** die Mittel (2) zur Rückgewinnung zur gleichen Bewegung angeregt werden wie die Führungsmittel (4), die sich hinter dem Schneidstand befinden.

19. Vorrichtung zum Schneiden eines Materials nach einem der Ansprüche 7 bis 18, **dadurch gekennzeichnet, daß** die Mittel (14) zur Positionierung des zu schneidenden Stücks zu einer Drehbewegung angeregt werden, so daß die Drehachsen (M, N) dieser Bewegung zueinander senkrecht und koplanar sind.

20. Vorrichtung zum Schneiden eines Materials nach einem der Ansprüche 7 bis 19, **dadurch gekennzeichnet, daß** die Durchlaufgeschwindigkeit des Schneidwerkzeugs (163) zwischen 10 und 550 m/min liegt.

## Claims

1. Method for cutting material using a wire or a blade, comprising a step of cutting a material to be cut out, and **characterised in that** it comprises a step of geometrical and thermal and/or mechanical transformation of an element of elongated shape (16), in order to form a cutting tool (163) suited to the material to be cut out, this step being realised upstream of the cutting zone so that the cutting tool (163) thus formed continuously, makes just one passage over the material to be cut out.

2. Method for cutting material according to Claim 1, **characterised in that** the geometrical transformation consists in giving a predetermined shape to the section of the elongated element (16) and in forming cutting or sharp means (160) on the outer surface of the elongated element (16).

3. Method for cutting material according to Claim 1 or 2, **characterised in that** the geometrical transformation consists in modifying the profile of the elongated element (16).

4. Method for cutting material according to one of Claims 1 to 3, **characterised in that** the thermal transformation is intended to modify the mechanical characteristics of the surface of the elongated element and preferably consists in surface hardening.

5. Method for cutting material according to one of Claims 1 to 4, **characterised in that** it comprises, upstream of the transformation step, a step of providing with elongated element (16) and, downstream from the cutting step, a step of recovering the cutting tool (164) that has passed over the material to be cut out.

6. Method for cutting material according to one of Claims 1 to 3, **characterised in that** it comprises a step of guiding the cutting tool (163) before and after the cutting step.

7. Device for cutting out material using a wire or a blade comprising means (14) for positioning the piece (15) of material to be cut out, a cutting tool (163) of the wire or blade type, **characterised in that** the cutting tool (163) is made from an elongated element (16), the section of which is modified by geometrical transformation means (10, 11, 12, 13) in order to form, on the one hand, a section of predetermined shape and, on the other hand, cutting or sharp elements (160) depending on the characteristics of the material to be cut out, said geometrical transformation means being located upstream of the cutting zone so that the cutting tool (163), thus formed continuously by said means, passes just once over the material to be cut out.

8. Device for cutting out material according to Claim 7, **characterised in that** the geometrical transformation means (10, 11, 12, 13) comprise calendering and/or rolling means (10) in order to form the section of predetermined shape.

9. Device for cutting out material according to Claim 7 or 8, **characterised in that** the geometrical transformation means (10, 11, 12, 13) comprise milling and/or grinding and hot or cold deformation means (11) in order to form the cutting or sharp elements (160), preferably toothed.

10. Device for cutting out material according to one of Claims 7 to 9, **characterised in that** the geometrical transformation means (10, 11, 12, 13) comprise means (13) for modifying the longitudinal profile of the elongated element (16) in order to form preferably a twist of given pitch.

11. Device for cutting out material according to one of Claims 7 to 10, **characterised in that** it comprises thermal and/or mechanical transformation means (6, 9) in order to modify the mechanical characteristics of the surface of the cutting tool (162) depending on the material to be cut out.

12. Device for cutting out material according to one of Claims 7 to 11, **characterised in that** the thermal transformation means (5) comprise a heat source of the induction and/or laser and/or infra-red type and means (9) for cooling the cutting tool.

13. Device for cutting out material according to one of Claims 7 to 12, **characterised in that** the mechanical transformation means (5) comprise a device carrying out work hardening.

14. Device for cutting out material according to one of Claims 7 to 13, **characterised in that** it comprises means (3, 4) for guiding the cutting tool, arranged upstream and downstream of the cutting station, and constituted by a material of a hardness greater than the hardness of the cutting tool, the movements of the guiding means (3, 4) being independent of each other.

15. Device for cutting out material according to Claim 14, **characterised in that** the guiding means (3', 4) comprise an upstream nozzle (3) and a downstream nozzle (4) of predetermined shapes and constituted by a material, with mechanical characteristics that are suited to the cutting tool (163).

16. Device for cutting out material according to Claim 14, **characterised in that** the guiding means comprise rotary rollers upstream and downstream, of predetermined shapes complementary to the cutting tool (163) and constituted by a material, with mechanical characteristics that are suited to this cutting tool.

17. Device for cutting out material according to one of Claims 7 to 16, **characterised in that** it comprises means (1) for providing with elongated elements (16) that feed the transformation means (5) and means (2) for recovering the cutting tool (164) once the cutting-out operation has been carried out.

18. Device for cutting out material according to Claim 17 and one of the Claims 14 to 16, **characterised in that** the recovery means (2) are driven by the same movement as the guiding means (4) located downstream from the cutting station.

19. Device for cutting out material according to one of Claims 7 to 18, **characterised in that** the means (14) for positioning the piece to be cut out are driven by a rotational movement so that the axes (M, N) of rotation of this movement are perpendicular to each other and coplanar.

20. Device for cutting out material according to one of Claims 7 to 19, **characterised in that** the speed of passage of the cutting tool (163) is between 10 and 550 m/min.
